## Europäisches Patentamt
## European Patent Office
## Office européen des brevets

(11) Veröffentlichungsnummer: **0 205 396 B1**

(12) **EUROPÄISCHE PATENTSCHRIFT**

(45) Veröffentlichungstag der Patentschrift:
15.03.89

(51) Int. Cl.⁴: **B23K 37/02**

(21) Anmeldenummer: 86730062.6

(22) Anmeldetag: **04.04.86**

(54) Umrüstvorrichtung für Orbital-Schweissgeräte.

(30) Priorität: **14.06.85 DE 8517844 U**

(43) Veröffentlichungstag der Anmeldung:
**17.12.86 Patentblatt 86/51**

(45) Bekanntmachung des Hinweises auf die Patenterteilung:
**15.03.89 Patentblatt 89/11**

(84) Benannte Vertragsstaaten:
**AT DE IT SE**

(56) Entgegenhaltungen:
**DE-B- 2 036 528**
**GB-A- 1 416 853**
**US-A- 1 782 461**
**US-A- 3 132 617**

(73) Patentinhaber: **MANNESMANN Aktiengesellschaft, Mannesmannufer 2, D-4000 Düsseldorf 1(DE)**

(72) Erfinder: **Braun, Franz, Theresienstrasse 158, D-8000 München 2(DE)**

(74) Vertreter: **Meissner, Peter E., Dipl.-Ing. et al, Meissner & Meissner Patentanwälte Herbertstrasse 22, D-1000 Berlin 33 Grunewald(DE)**

## Beschreibung

Zum Verschweißen von Kleinrohrleitungen und Rohrleitungselementen (z.B. Krümmer, T-Stücke, Flansche, Reduzierungen usw.) werden vielfach vollmechanische Schweißverfahren angewendet. Die hierfür gebräuchlichen Geräte arbeiten nach dem Orbit-System, das heißt, der Schweißkopf (Orbital-Schweißkopf) läuft beim Schweißen um die feststehende Rohrleitung herum. Derartige Schweißgeräte besitzen eine Anklemmvorrichtung und werden auch als Rohrschweißzangen bezeichnet, da sie im erweiterten Sinn als Zange mit einem verschließbaren Maul ausgebildet sind und an die Rohrleitung angeklemmt werden können. Die Rohrschweißzange weist eine von einem Gleichstrommotor angetriebene und das Rohr peripher umgreifende Drehvorrichtung auf, die den Schweißkopf aufnimmt und während der Schweißung kontinuierlich um das Rohr herumführt. Die Schweißköpfe arbeiten in der Regel nach einem Elektroschweißverfahren mit oder ohne Kaltdrahtzufuhr sowie mit oder ohne Schutzgaszufuhr.

Als Beispiel für die Ausbildung von Schweißzangen sei auf die DE-B2 2 036 528 bzw. auf die GB-A 1 416 853 verwiesen.

Derartige Schweißzangen haben sich im praktischen Betrieb an sich gut bewährt. In vielen Fällen sind diese Geräte aber nicht einsetzbar, weil der erforderliche Platz für die Befestigung der Anklemmvorrichtung am Rohr und/oder für die Mechanik (Aufnahme des Schweißkopfes, Schlauchstützen für Schutzgaszufuhr usw.) nicht vorhanden ist. So muß beispielsweise bei einem T-Stück, das an eine Rohrleitung angeschweißt werden soll, nicht nur eine Mindestschenkellänge an dem T-Stück selbst vorhanden sein, damit der Schweißkopf nicht an den abgewinkelten Schenkel anschlägt, sondern darüber hinaus muß an dem Rohrstück selbst auch eine geeignete Stelle mit ausreichend Platz für das Angreifen der Klemmbacken der Anklemmvorrichtung sein, was zum Beispiel im Falle eines gekrümmten oder konisch ausgebildeten Rohrendes häufig nicht gegeben ist.

Aus der US-A 1 782 461 ist eine Schweißmaschine für das vollmechanische Rundnahtschweißen bekannt, die im wesentlichen aus einem Stativ mit daran befestigtem Ausleger, der den Schweißkopf trägt, besteht.

Das zu schweißende Werkstück befindet sich auf einem unterhalb des Auslegers angeordneten drehbaren Werkstückaufnahmetisch.

Aufgabe der Neuerung ist es daher, eine Vorrichtung anzugeben, mit der ein als Rohrschweißzange mit Orbital-Schweißkopf ausgebildetes Schweißgerät in einfacher Weise so umgerüstet werden kann, daß auch Rundnahtschweißungen an Rohrleitungselementen möglich werden, die nach dem Orbital-Prinzip mit dem jeweiligen Schweißgerät nicht ausführbar sind.

Gelöst wird diese Aufgabe durch eine Vorrichtung mit den Merkmalen des Schutzanspruchs 1. Vorteilhafte Weiterbildungen sind in den Unteransprüchen 2 bis 11 gekennzeichnet. Die neuerungsgemäße Vorrichtung ist also im wesentlichen wie folgt aufgebaut:

Sie besteht zunächst aus einer Grundplatte, an der ein aufrecht stehendes Stativ zur lösbaren Befestigung des Schweißkopfes montiert ist. Weiterhin ist mit der Grundplatte ein zumindest teilweise als Kreiszylinder ausgebildeter Fuß, an den die Anklemmvorrichtung der Schweißzange mit Drehvorrichtung anklemmbar ist, fest verbunden. In dem Fuß ist ein Werkstückaufnahmetisch drehbar gelagert, wobei die Drehachse des Werkstückaufnahmetischs koaxial zur Zylinderachse des Fußes liegt. Schließlich ist vorgesehen, daß über einen Mitnehmer eine mechanische Verbindung zwischen dem Werkstückaufnahmetisch und der Drehvorrichtung hergestellt wird.

Anhand der nachfolgenden Figuren wird die Neuerung mit ihren vorteilhaften Ausgestaltungen näher erläutert. Es zeigen:

Fig. 1: Eine Rohrschweißzange mit Orbitalschweißkopf in Ansicht,

Fig. 2: einen Rohrschweißkopf mit Kaltdrahtzufuhr,

Fig. 3: eine neuerungsgemäße Vorrichtung in Ansicht und

Fig. 4: eine Vorrichtung gemäß Fig. 3 mit Schweißzange, Schweißkopf und aufgespanntem Werkstück.

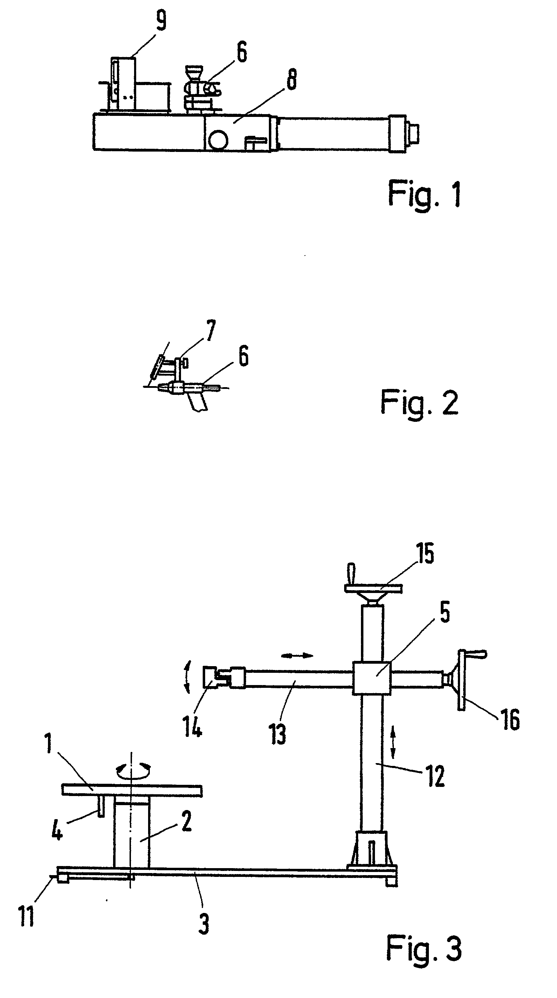

In Fig. 1 ist eine übliche Schweißvorrichtung 8 in Ansicht dargestellt, die als Schweißzange ausgebildet ist und nach dem Orbitalprinzip arbeitet. Weiterhin sind die die Bauhöhe der Schweißzange 8 erheblich vergrößernden Schlauchstützen 9 erkennbar. Der in Fig. 1 flach liegende Schweißkopf 6 ist in Fig. 2 mit seiner Kaltdrahtzufuhr 7 gesondert dargestellt.

Der prinzipielle Aufbau der neuerungsgemäßen Vorrichtung geht aus Fig. 3 hervor. Auf der Grundplatte 3 ist ein zylindrischer Fuß 2 fest angebracht. In dem Fuß 2 ist ein Werkstückaufnahmetisch 1 drehbar gelagert. Die vertikale Drehachse des Werkstückaufnahmetischs 1 ist koaxial zur Zylinderachse des Fußes 2 gerichtet. Unterhalb des Werkstückaufnahmetisches 1 ist ein Mitnehmer 4 in Form eines Stiftes befestigt. Es empfiehlt sich, den Mitnehmer 4 als ausklinkbaren Stift oder als schwenkbaren Hebel zu gestalten, damit die formschlüssige Verbindung zwischen der Schweißzange 8 und dem Werkstückaufnahmetisch 1 leicht gelöst werden kann; hierdurch lassen sich Beschädigungen der Schweißzange 8 z.B. infolge von Stoßbelastungen beim Aufspannen eines Werkstücks 17 sicher vermeiden.

Im Abstand vom Fuß 2 ist der Ständer 12 des Stativs 5 fest mit der Grundplatte 3 verbunden. Der Ständer 12 trägt einen rechtwinklig zu diesem ausgerichteten Ausleger 13, an dessen freiem Ende eine über ein Gelenk bewegliche Befestigungsvorrichtung 14 angeordnet ist. Das Gelenk ist feststellbar und kann mit einer oder mehreren Drehachsen (z. B. als Kardan- oder Kugelgelenk) ausgebildet sein. Über die Verstellvorrichtungen 15 und 16 können die Höhenlage und die Ausladung des Auslegers 13 eingestellt werden. Zusätzlich ist es möglich, den Ausleger 13 um die Achse des Ständers 12 oder zusammen mit dem Ständer 12 horizontal zu verschwenken. Weiterhin ist die Vorrichtung mit einer Zuleitung 11 ausgestattet, mittels derer Schutzgas durch die Drehachse des Werkstückaufnahmetisches 1 geleitet werden kann.

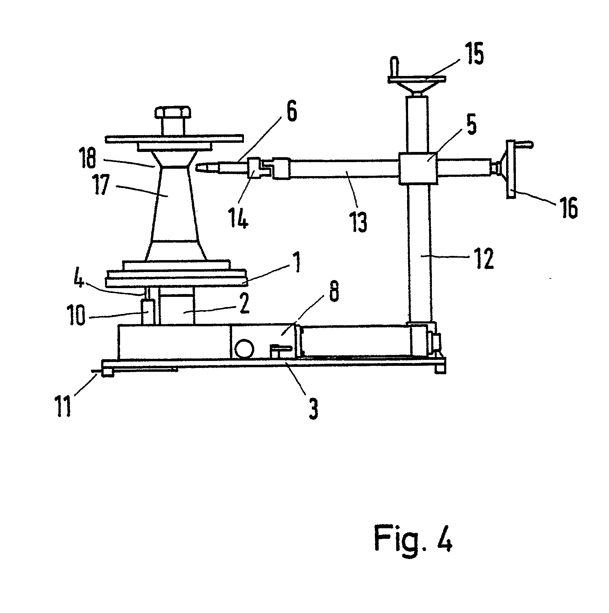

Fig. 4 zeigt nun, wie die Orbital-Schweißvorrichtung 8 umgerüstet wird auf das mechanische Rundnahtschweißen mit feststehendem Schweißkopf 6 und drehendem Werkstück 17. Die Schlauchstützen 9 und der Schweißkopf 6 samt zugehöriger Befestigungselemente wurden von der Schweißzange 8 abgebaut. In diesem Zustand wird die Schweißzange 8 mit ihrer Klemmvorrichtung an den zylindrischen Fuß 2 angeklemmt. Anstelle der Befestigungselemente für den Schweißkopf 6 wird ein Mitnehmerblock 10 in die Drehvorrichtung der Schweißzange 8 eingesetzt. Der Mitnehmerblock 10 bietet dem Mitnehmer 4 eine Eingriffsmöglichkeit, so daß beim Einschalten der Drehvorrichtung der Schweißzange 8 der Werkstückaufnahmetisch 1 in Rotation versetzt wird. Um eine Übertragung eines Schweißstromes von dem Werkstückaufnahmetisch auf die Drehvorrichtung auszuschließen, ist der Mitnehmer 4 und/oder der Mitnehmerblock 10 aus elektrisch nicht leitendem Material. Der Schweißkopf 6 wird mit Hilfe der Befestigungsvorrichtung 14 am freien Ende des Auslegers 13 befestigt.

Das Werkstück 17, dessen zu verschweißende Einzelteile aufgrund mangelnden Montageplatzes und/oder ungünstiger Geometrie (konisches Rohrstück) ein Anklemmen der Orbital-Schweißvorrichtung 8 nicht gestattet hätte, ist auf dem Werkstückaufnahmetisch 1 aufgespannt, wobei die Achse des Werkstücks 17 koaxial zur Drehachse liegt. Mit Hilfe der Verstellvorrichtungen 15 und 16 sowie des Gelenkes an der Befestigungsvorrichtung 14 und aufgrund der Schwenkbarkeit des Auslegers 13 läßt sich der Schweißkopf 6 problemlos in eine geeignete Position zum Schweißspalt 18 des Werkstücks 17 bringen. Über die Zuleitung 11 kann Schutzgas in das Innere des Werkstücks 17 geleitet werden, welches stirnseitig durch eine Abdeckung mit Druckausgleichsbohrungen verschlossen wird. Der Masseanschluß für das Werkstück 17 läßt sich beim Elektroschweißen problemlos durch einen Anschluß an die Grundplatte 3 realisieren, da die Lagerung des Werkstückaufnahmetisches 1 für die Übertragung des Schweißstromes ausgelegt ist.

In der dargestellten Ausführung ist die Drehachse des Werkstückaufnahmetisches 1 vertikal angeordnet. Selbstverständlich läßt sich im Rahmen der Neuerung auch eine horizontale Drehachse ausführen.

Mit Hilfe dieser einfachen Umrüstvorrichtung läßt sich der Anwendungsbereich einer vorhandenen Schweißvorrichtung mit Orbital-Schweißkopf beträchtlich erweitern.

## Patentansprüche

1. Vorrichtung zur Umrüstung einer Rohrschweißzange mit einem Orbital-Schweißkopf in ein Standgerät zum vollmechanischen Schweißen von Rundnähten, wobei das Standgerät ein auf einer Grundplatte (3) feststehendes Stativ (5) mit einem einstellbaren Ausleger (13) für einen lösbar befestigten Schweißkopf (6) und einen motorisch drehbaren Werkstückaufnahmetisch (1) aufweist, dadurch gekennzeichnet, daß der Werkstückaufnahmetisch (1) in einem mit der Grundplatte (3) fest verbundenen Fuß (2) gelagert ist, daß der Werkstückaufnahmetisch (1) mit einem Mitnehmer (4) für die Ankopplung an die Drehvorrichtung der Schweißzange (8) verbunden ist und daß der Fuß (2) zum Anklemmen der Drehvorrichtung der Rohrschweißzange (8) in seiner Mantelfläche ganz oder in einem Teilstück kreiszylindrisch ausgebildet ist, wobei die Achse des Zylinders koaxial zur Drehachse des Werkstückaufnahmetisches (1) liegt.

2. Vorrichtung nach Anspruch 1, dadurch gekennzeichnet, daß die Ausladung des Auslegers (13) einstellbar ist.

3. Vorrichtung nach einem der Ansprüche 1 bis 2, dadurch gekennzeichnet, daß die Befestigung (14) des Schweißkopfes (6) mit einem feststellbaren Gelenk ausgebildet ist.

4. Vorrichtung nach Anspruch 3, dadurch gekennzeichnet, daß das Gelenk als Kardangelenk ausgebildet ist.

5. Vorrichtung nach Anspruch 3, dadurch gekennzeichnet, daß das Gelenk als Kugelkopfgelenk ausgebildet ist.

6. Vorrichtung nach einem der Ansprüche 1 bis 5, dadurch gekennzeichnet, daß der Mitnehmer (4) an der Unterseite des Werkstückaufnahmetisches (1) befestigt ist und daß zur Verbindung des Mitnehmers (4) mit der Drehvorrichtung in die ursprünglich für den Schweißkopf (6) vorgesehene Aufnahme ein Mitnehmerblock (10) eingesetzt ist.

7. Vorrichtung nach Anspruch 6, dadurch gekennzeichnet, daß der Mitnehmerblock (10) aus elektrisch nicht leitendem Material besteht.

8. Vorrichtung nach einem der Ansprüche 1 bis 7, dadurch gekennzeichnet, daß an der Grundplatte (3) eine Zuleitung (11) angeordnet ist, mittels derer Schutzgas durch die Achse des Fußes (2) und des Werkstückaufnahmetisches (1) zur Schweißstelle leitbar ist.

9. Vorrichtung nach einem der Ansprüche 1 bis 8, dadurch gekennzeichnet, daß die Lagerung des Werkstückaufnahmetisches (1) für die Übertragung eines Schweißstromes ausgelegt ist.

## Claims

1. A device for converting pipe welding tongs with an orbital welding head into a standing apparatus for the fully mechanical welding of circular seams, wherein the standing apparatus has a stand (5) which is fixed on a base plate (3) and which has an adjustable arm (13) for a detachably fastened welding head (6) and a workpiece-holding table (1) which can be rotated by a motor, characterised in that the workpiece-holding table (1) is mounted in a pedestal (2) which is connected rigidly to the base plate (3), that the workpiece-holding table (1) is connected to an engaging part (4) for connection to the rotating device of the welding tongs (8) and that the casing surface of the pedestal (2) is at least partly cylindrical to clamp the rotation device of the pipe welding tongs (8), the axis of the cylinder being coaxial to the axis of rotation of the workpiece-holding table (1).

2. A device according to Claim 1, characterised in that the working radius of the arm (13) is adjustable.

3. A device according to one of Claims 1 to 2, characterised in that the attachment (14) of the welding head (6) is formed with a lockable joint.

4. A device according to Claim 3, characterised in that the joint is designed as a cardan joint.

5. A device according to Claim 3, characterised in that the joint is designed as a spherical head joint.

6. A device according to one of Claims 1 to 5, characterised in that the engaging part (4) is fixed to the underside of the workpiece-holding table (1) and that an engaging block (10) is inserted into the recess originally provided for the welding head (6) in order to connect the engaging part (4) to the rotating device.

7. A device according to Claim 6, characterised in that the engaging block (10) is made of electrically non-conductive material.

8. A device according to one of Claims 1 to 7, characterised in that a supply pipe (11) is disposed on the base plate (3), by means of which protective gas can be passed through the axis of the pedestal (2) and the workpiece-holding table (1) to the welding point.

9. A device according to one of Claims 1 to 8, characterised in that the mounting of the workpiece-holding table (1) is designed for the transmission of a welding current.

**Revendications**

1. Dispositif pour équiper une pince de soudure de tubes comportant une tête de soudure orbitale dans un appareil sur pied pour la soudure totalement mécanisée de soudures circulaires, l'appareil sur pied comportant un pied (5) fixé sur une plaque de base (3) muni d'un bras réglable (13) pour une tête de soudure (6) fixée de façon amovible et une table de réception de pièce (1) pouvant tourner de façon motorisée, caractérisé en ce que la table de réception de pièce (1) est montée sur un socle (2) solidaire de la plaque de base (3), en ce que la table de réception de pièce (1) est reliée à un entraîneur (4) pour l'accouplement au dispositif de rotation de la pince de soudure (8) et en ce que le socle (2) pour serrer le dispositif de rotation de la pince de soudure (8) dans sa surface latérale est, en totalité ou partiellement, un cylindre circulaire, l'axe du cylindre étant coaxial à l'axe de rotation de la table de réception de pièce (1).

2. Dispositif selon la revendication 1, caractérisé en ce que la portée du bras (13) est réglable.

3. Dispositif selon la revendication 1 ou la revendication 2, caractérisé en ce que la fixation (14) de la tête de soudure (6) est réalisée par une articulation qui peut être immobilisée.

4. Dispositif selon la revendication 3, caractérisé en ce que l'articulation est une articulation à la Cardan.

5. Dispositif selon la revendication 3, caractérisé en ce que l'articulation est une articulation à rotule.

6. Dispositif selon une des revendications 1 à 5, caractérisé en ce que l'entraîneur (4) est fixé au dessous de la table de réception de pièce (1) et en ce que, pour relier l'entraîneur (4) au dispositif de rotation, un bloc d'entraîneur (10) est monté dans le logement prévu primitivement pour la tête de soudure (6).

7. Dispositif selon la revendication 6, caractérisé en ce que le bloc d'entraîneur (10) est réalisé en matériau électriquement isolant.

8. Dispositif selon une des revendication 1 à 7, caractérisé en ce qu'une canalisation (11) est disposée sur la plaque de base (3), grâce à laquelle un gaz protecteur peut être amené à travers l'axe du socle (2) et de la table de réception de pièce (1) pour la soudure.

9. Dispositif selon une des revendications 1 à 8, caractérisé en ce que l'agencement de la table de réception de pièce (1) est étudié pour la transmission d'un courant de soudage.

Fig. 1

Fig. 2

Fig. 3

Fig. 4